(19) Europäisches Patentamt
European Patent Office
Office européen des brevets

(11) **EP 2 410 798 A1**

(12) **EUROPEAN PATENT APPLICATION**
published in accordance with Art. 153(4) EPC

(43) Date of publication:
**25.01.2012 Bulletin 2012/04**

(51) Int Cl.:
***H04W 56/00*** (2009.01)

(21) Application number: **10753123.8**

(22) Date of filing: **17.03.2010**

(86) International application number:
**PCT/CN2010/071089**

(87) International publication number:
**WO 2010/105556 (23.09.2010 Gazette 2010/38)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **18.03.2009 CN 200910047747**

(71) Applicant: **Alcatel Lucent
75008 Paris (FR)**

(72) Inventors:
• **ZHANG, Xiaobo
Shanghai 201206 (CN)**
• **YOU, Mingli
Shanghai 201206 (CN)**

(74) Representative: **2SPL Patentanwälte
Würmtalstraße 119
DE-81375 München (DE)**

(54) **METHOD AND DEVICE FOR CONTROLLING TRANSMISSION DELAY IN A COORDINATED MULTI-POINT TRANSMISSION SYSTEM**

(57) The present invention proposed a method and a device for controlling propagation delay in a base station of a wireless communication system based on COMP transmission. To be specific, when sending downlink data to a mobile station, the base station processes part of data of one or more other unsynchronized base stations and sends the processed part of data to the mobile station at one or more specific time slots simultaneously. By applying the solution of the present invention, because data, corresponding to the length of the out-of-synchronization information, of an unsynchronized base station is sent to the mobile station at a specific time slot by a synchronized base station or other unsynchronized base stations, DL data that is sent to the mobile station by the unsynchronized base station all falls within the detection window of the mobile station, such that the resulted problem of the decreased performance of a receiver due to the propagation delay is solved.

Fig. 3

**Description**

**FIELD OF THE INVENTION**

The present invention relates to COMP (Coordinated Multi-Point) transmission in a wireless communication system, especially to the coherent transmission in the COMP transmission.

**BACKGROUND OF THE INVENTION**

Considering the multi-path transmission of a single cell, influence on the bit error ratio performance of a receiver is unacceptable even if propagation delay between two COMP cells is less than a CP (Cyclic Prefix) length.

Furthermore, the influence of propagation delay on the bit error ratio performance of a receiver ties to the transmission manner. For the same propagation delay, the bit error ratio performance of a receiver adopting non-coherent transmission is better than the bit error ratio performance of a receiver adopting coherent transmission. For the coherent transmission and the non-coherent transmission, the bit error ratio performance of a receiver when the propagation delay is less than a CP is better than the bit error ratio performance of a receiver when the propagation delay is greater than a CP.

Although the DL (downlink) coherent transmission between COMP cells can obtain greater gain than non-coherent transmission. However, the performance of DL coherent transmission greatly deteriorates due to the propagation delay, and the performance of coherent transmission even becomes equivalent to that of the non-coherent transmission when the propagation delay is large.

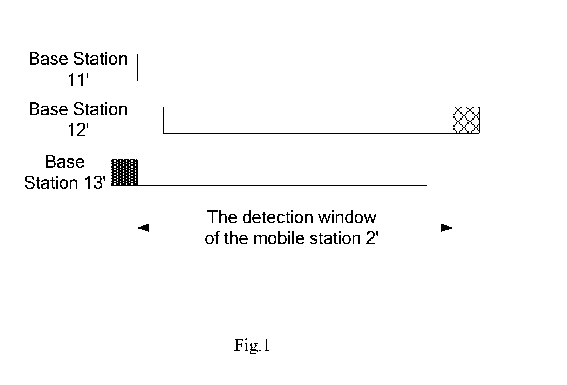

Fig.1 shows a schematic diagram of the resulted problem of non-synchronization due to different propagation delay of three BSs (Base Station) in DL coherent transmission according to the prior art. The region between the left and right dashed lines in Fig. 1 denotes the detection window of MS 2' (mobile station). The three BSs 11', 12' and 13' achieve GPS (Global Positioning System) synchronization and send DL data to the MS 2' simultaneously. The MS 2' and the BS 11' achieve synchronization, that is, DL data sent by the BS 11' is just detected completely within the detection window of the MS 2'. Because the distance from the BS 12' to the MS 2' is farther than the distance from the BS 11' to the MS 2', but the distance from the BS 13' to the MS 2' is nearer than the distance from the BS 11' to the MS 2', the MS 2' can only detect part of data from the BS 12' and the BS 13' respectively within its detection window due to the problem of propagation delay. As shown in Fig.1, part of tail data of the BS 12' will fall outside of the detection window of the MS 2', while part of head data of the BS 13' will fall outside of the detection window of the MS 2'. If the length of data falling outside of the detection window of the MS 2' in DL data, which the BS 12' and the BS 13' respectively send to the MS 2', is greater than a CP, then, the receiving performance of the MS 2' will greatly deteriorate.

For aforesaid problem, there are two solutions in the prior art:

1) adding the length of CP to tolerate greater propagation delay;
2) replacing coherent transmission with non-coherent transmission. However, for the first solution, the system efficiency will greatly decrease due to the adding of the length of CP. Moreover, if the propagation delay is still greater than the length of CP, the bit error ratio performance of a receiver will still be greatly influenced.

For the second solution, it means that the gain from coherent transmission is abandoned due to the fact that coherent transmission is replaced with non-coherent transmission.

**SUMMARY OF THE INVENTION**

In order to solve the aforesaid disadvantages in the prior art, the present invention proposes a method and device for controlling propagation delay in a base station of a wireless communication system based on COMP transmission. To be specific, when sending downlink data to a MS, BS processes part of data of one or more other unsynchronized base stations and sends the processed part of data to the MS at one or more specific time slots simultaneously.

According to the first aspect of the present invention, there is provided a method of controlling propagation delay in a base station of a wireless communication system based on COMP transmission, the method comprising the steps of: when sending downlink data to a mobile station, processing part of data of one or more other unsynchronized base stations and sending the processed part of data to the mobile station at one or more specific time slots simultaneously.

According to the second aspect of the present invention, there is provided a method of assisting to control propagation delay in an unsynchronized base station of a wireless communication system based on COMP transmission, wherein when out-of-synchronization information corresponding to the unsynchronized base station is larger than 0, the method comprises the steps of: sending to a mobile station downlink data to be transmitted with head data block corresponding to the length of the out-of-synchronization information clipped.

According to the third aspect of the present invention, there is provided a method of assisting to control propagation delay in an unsynchronized base station of a wireless communication system based on COMP transmission, wherein when out-of-synchronization information corresponding to the unsynchronized base station is less than 0, the method comprises the steps of: postponing transmission starting moment for the length of the out-of-synchronization information, and sending to a mobile station downlink data to be transmitted with tail data block corresponding to said length of the out-of-synchronization information clipped.

According to the fourth aspect of the present invention, there is provided a control device for controlling propagation delay in a base station of a wireless communication system based on COMP transmission, wherein the control device is used for, when sending downlink data to a mobile station, processing part of data of one or more other unsynchronized base stations and sending the processed part of data to the mobile station at one or more specific time slots simultaneously.

According to the fifth aspect of the present invention, there is provided a first assisting control device for assisting to control propagation delay in an unsynchronized base station of a wireless communication system based on COMP transmission, wherein when out-of-synchronization information corresponding to the unsynchronized base station is larger than 0, the first assisting control device comprises: a fourth sending means, for sending to a mobile station downlink data to be transmitted with head data block corresponding to the length of the out-of-synchronization information clipped.

According to the fifth aspect of the present invention, there is provided a second assisting control device for assisting to control propagation delay in an unsynchronized base station of a wireless communication system based on COMP transmission, wherein when out-of-synchronization information corresponding to the unsynchronized base station is less than 0, the second assisting control device comprises: a fifth sending means, for postponing transmission starting moment for the length of the out-of-synchronization information, and sending to a mobile station downlink data to be transmitted with tail data block corresponding to said length of the out-of-synchronization information clipped.

In the present invention, because data, corresponding to the length of the out-of-synchronization information, of an unsynchronized base station is sent to the mobile station at a specific time slot through a synchronized base station or other unsynchronized base stations, DL data that is sent to the mobile station by the unsynchronized base station all falls within the detection window of the mobile station, such that the resulted problem of the decreased performance of a receiver due to the propagation delay is solved.

## BRIEF DESCRIPTION OF THE DRAWINGS

By reading the detailed description of the non-limiting embodiments with reference to the following drawings, other features, objects and advantages of the present invention will become apparent.

Fig.1 shows a schematic diagram of the resulted problem of non-synchronization due to different propagation delay of three BSs in DL coherent transmission, according to the prior art;

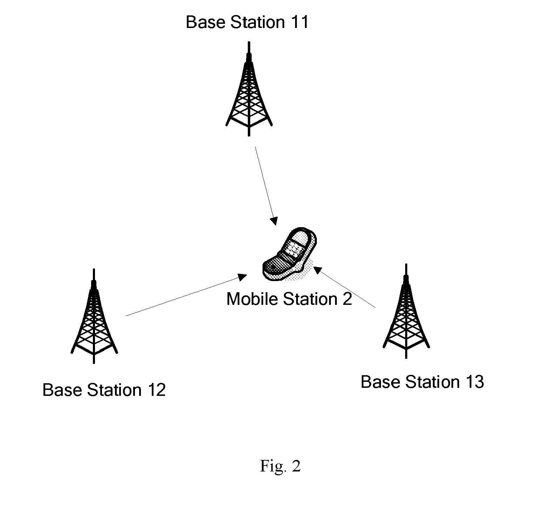

Fig.2 shows a schematic diagram of a network of COMP transmission system based on DL coherent transmission;

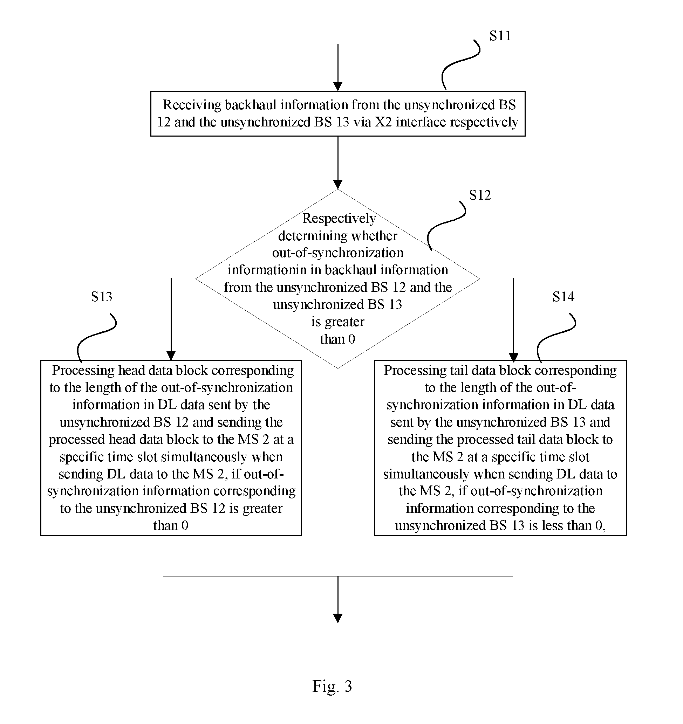

Fig.3 shows a flowchart of a method of a synchronized BS processing part of data of one or more other unsynchronized BSs and sending the processed part of data to the MS at one or more specific time slots simultaneously, when sending downlink data to a MS, according to one embodiment of the present invention;

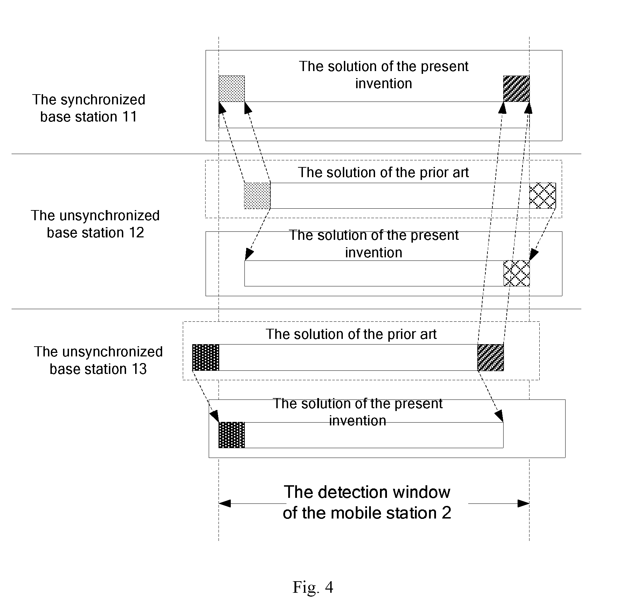

Fig.4 shows a schematic diagram of a synchronized BS processing part of data of one or more other unsynchronized BSs and sending the processed part of data to the MS at one or more specific time slots simultaneously, when sending downlink data to a MS,, according to one embodiment of the present invention;

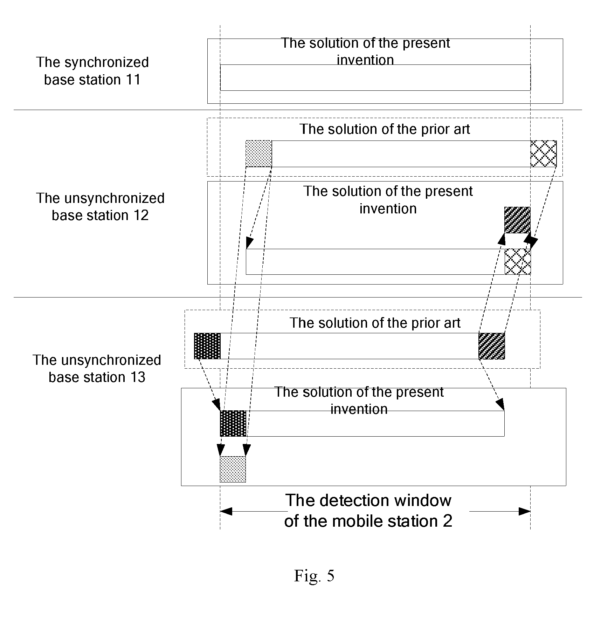

Fig.5 shows a schematic diagram of an unsynchronized BS processing part of data of one or more other unsynchronized BSs and sending the processed part of data to the MS at one or more specific time slots simultaneously, when sending downlink data to a MS, according to another embodiment of the present invention;

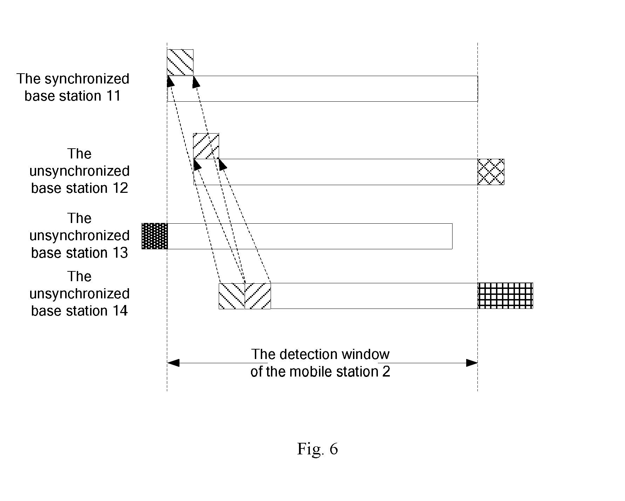

Fig.6 shows a schematic diagram of controlling propagation delay, according to another embodiment of the present invention; and

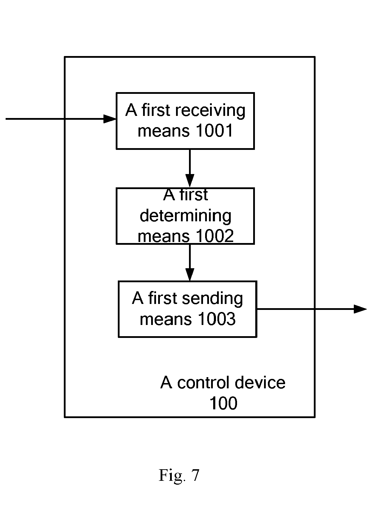

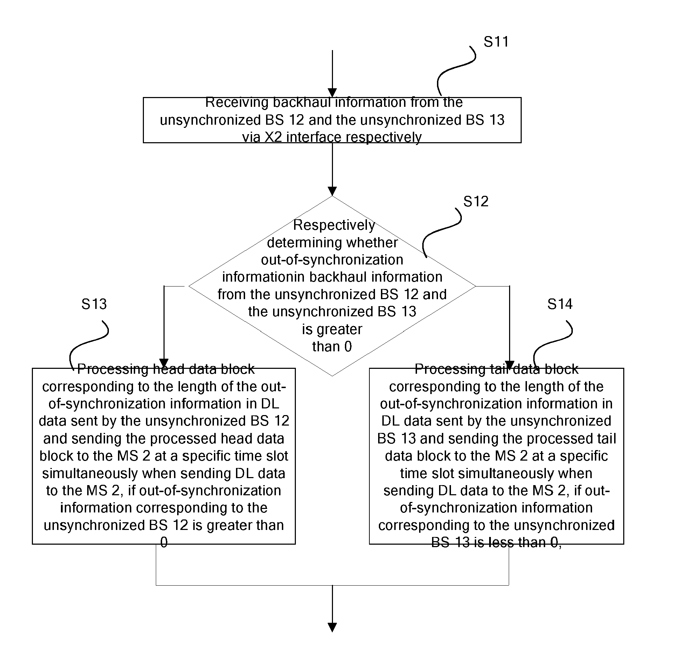

Fig.7 shows a block diagram of structure of a control device in a synchronized BS for processing part of data of one or more other unsynchronized BSs and sending the processed part of data to the MS at one or more specific time slots simultaneously, when sending downlink data to a MS, according to one embodiment of the present invention.

In drawings, same or similar reference signs refer to the same or similar component.

## DETAILED DESCRIPTION OF EMBODIMENTS

In COMP transmission system based on DL coherent transmission, a plurality of BSs serve one MS. Because the transmission distances from each of the plurality of BSs to the MS are different, it causes different DL propagation delay from each BS to the MS. When the MS establishes synchronization with one of the plurality of BSs, DL data that is sent to the MS by the synchronized BS will completely fall within the detection window of the MS, but part of DL data that is sent to the MS by other unsynchronized BSs will fall outside of the detection window of the MS due to the propagation delay, so that the receiving performance of the MS deteriorates.

Based on this, when sending DL data to a MS, the synchronized BS may process part of data of one or more other unsynchronized BSs and send the processed part of data to the MS at one or more specific time slots simultaneously, so that DL data that is sent to the MS by one or more other unsynchronized BSs all falls within the detection window of the MS. Certainly, when sending DL data to a MS, the unsynchronized BS may also process part of data of one or more other unsynchronized BSs and send the processed part of data to the MS at one or more specific time slots simultaneously.

Hereinafter, referring to the drawings, the two scenarios are described respectively.

Fig.2 shows a schematic diagram of a network of COMP transmission system based on DL coherent transmission. The BS 11, the BS 12, the BS 13 and the MS 2 are shown in Fig.2. Wherein, the BS 11, the BS 12 and the BS 13 achieve synchronization of GPS and send DL data to the MS 2 simultaneously. The MS 2 and the BS 11 achieve synchronization, and DL data that is sent to the MS 2 by the synchronized BS 11 completely falls within the detection window of the MS 2. The propagation distance from the unsynchronized BS 12 to the MS 2 is greater than the propagation distance from the synchronized BS 11 to the MS 2, and part of tail data in DL data that is sent to the MS 2 by the unsynchronized BS 12 falls outside of the detection window of the MS2 due to propagation delay. The propagation distance from the unsynchronized BS 13 to the MS 2 is less than the propagation distance from the synchronized BS 11 to the MS 2, part of head data in DL data that is sent to the MS 2 by the unsynchronized BS 13 falls outside of the detection window of the MS 2 due to propagation delay.

It should be noted that the present invention will be descried by taking it as example that the COMP transmission system based on DL coherent transmission comprises three BSs simultaneously serving one MS, but those skilled in the art should understand that the number of BSs in the COMP transmission system based on DL coherent transmission of the present invention is not limited to three.

In the COMP transmission system based on DL coherent transmission shown in Fig.2, the synchronized BS 11, the unsynchronized BS 12 and the unsynchronized BS 13 perform backhaul of data and signaling via X2 interface before the three BSs starts to send DL data to the MS 2, therefore, any one of the three BSs knows DL data to be transmitted, channel transmission matrix H and out-of-synchronization information (namely propagation delay from other BSs to the MS 2) from other BSs to the MS 2. To be specific, the synchronized BS 11 will receive backhaul information respectively from the unsynchronized BS 12 and the unsynchronized BS 13. Wherein, backhaul information that has been received from the unsynchronized BS 12 by the synchronized BS 11 comprises DL data that is to be sent from the unsynchronized BS 12 to the MS 2, the channel transmission matrix of the DL channel from the unsynchronized BS 12 to the MS 2 and out-of-synchronization information of the unsynchronized BS 12 and the MS 2, namely propagation delay from the unsynchronized BS 12 to the MS 2; similarly, backhaul information that has been received from the unsynchronized BS 13 by the synchronized BS 11 comprises DL data that is to be sent from the unsynchronized BS 13 to the MS 2, the channel transmission matrix of the DL channel from the unsynchronized BS 13 to the MS 2 and out-of-synchronization information of the unsynchronized BS 13 and the MS 2, namely propagation delay from the unsynchronized BS 13 to the MS 2.

Accordingly, the unsynchronized BS 12 will also receive backhaul information respectively from the synchronized BS 11 and the unsynchronized BS 13; the unsynchronized BS 13 will also receive backhaul information respectively from the synchronized BS 11 and the unsynchronized BS 12, which will not be described in detail for the purpose of simplicity.

Hereinafter, referring to Fig.2, Fig.3 and Fig.4, the scenario that when sending downlink data to the MS 2, the synchronized BS 11 processes part of data of the unsynchronized BS 12 and the unsynchronized BS 13 and sends the processed part of data to the MS 2 respectively at specific time slots simultaneously is described.

Fig.3 shows a flowchart of a method of the synchronized BS 11 processing part of data of the unsynchronized BS 12 and the unsynchronized BS 13 and sending the processed part of data to the MS 2 at different time slots simultaneously, when sending DL data to the MS 2, according to one embodiment of the present invention.

Fig.4 shows a schematic diagram of the synchronized BS 11 processing part of data of the unsynchronized BS 12 and the unsynchronized BS 13 and sending the processed part of data to the MS 2 at different time slots simultaneously, when sending DL data to the MS 2, according to one embodiment of the present invention.

In Fig.4, the first row corresponds to DL data from the synchronized BS 11 that is received within the detection window of the MS 2 in the solution of the present invention. The upper portion of the second row corresponds to DL data from the unsynchronized BS 12 that is received within the detection window of the MS 2 in the solution of the prior art, the lower portion of the second row corresponds to DL data from the unsynchronized BS 12 that is received within the detection window of the MS 2 in the solution of the present invention. The upper portion of the third row corresponds to DL data from the unsynchronized BS 13 that is received within the detection window of the MS 2 in the solution of the prior art, the lower portion of the third row corresponds to DL data from the unsynchronized BS 13 that is received within the detection window of the MS 2 in the solution of the present invention.

As shown in Fig.3, firstly, in the step S11, the synchronized BS 11 respectively receives backhaul information from the unsynchronized BS 12 and the unsynchronized BS 13 via X2 interface. Wherein, backhaul message that is received from the unsynchronized BS 12 by the synchronized BS 11 comprises DL data to be transmitted from the unsynchronized BS 12 to the MS 2, the channel transmission matrix of DL channel from the unsynchronized BS 12 to the MS 2 and out-of-synchronization information of the unsynchronized BS 12 and the MS 2, namely propagation delay from the unsynchronized BS 12 to the MS 2; backhaul message that is received from the unsynchronized BS 13 by the synchronized BS 11 comprises DL data to be transmitted from the unsynchronized BS 13 to the MS 2, the channel transmission matrix of DL channel from the unsynchronized BS 13 to the MS 2 and out-of-synchronization information of the unsynchronized BS 13 and the MS 2, namely propagation delay from the unsynchronized BS 13 to the MS 2.

Then, in the step S12, the synchronized BS 11 respectively determines whether out-of-synchronization information in backhaul information from the unsynchronized BS 12 and the unsynchronized BS 13 is greater than 0.

Because the MS 2 and the synchronized BS 11 achieve synchronization, out-of-synchronization information from the synchronized BS 11 to the MS 2 is considered as 0. And because the propagation distance from the unsynchronized BS 12 to the MS 2 is greater than the propagation distance from the synchronized BS 11 to the MS 2, out-of-synchronization information corresponding to the unsynchronized BS 12 is greater than 0; and because the propagation distance from the unsynchronized BS 13 to the MS 2 is less than the propagation distance from the synchronized BS 11 to the MS 2, out-of-synchronization information corresponding to the unsynchronized BS 13 is less than 0.

Because out-of-synchronization information corresponding to the unsynchronized BS 12 is greater than 0, in the step S13, when sending DL data to the MS 2, the synchronized BS 11 processes head data block corresponding to the length of the out-of-synchronization information in DL data sent by the unsynchronized BS 12 and sends the processed head data block to the MS 2 at a specific time slot simultaneously.

Wherein, the specific time slot is the start time slot, lasting the length of the out-of-synchronization information, within the time slot occupied by the synchronized base station 11 for sending DL data.

Accordingly, the unsynchronized BS 12 sends to the MS 2 DL data to be transmitted with the head data block corresponding to the length of the out-of-synchronization information clipped.

For example, if the out-of-synchronization information of the unsynchronized BS 12 and the MS 2 is $0.1\mu s$, then when sending DL data to the MS 2, the synchronized BS 11 processes head data block corresponding to the length of $0.1\mu s$ in DL data sent by the unsynchronized BS 12 and sends the processed head data block to the MS 2 at the start time slot of the length of $0.1\mu s$ for sending DL data simultaneously.

Accordingly, the unsynchronized BS 12 sends to the MS 2 DL data to be transmitted with the head data block corresponding to the length of $0.1\mu s$ clipped.

It may be seen from Fig.4 that the upper portion of the second row corresponds to DL data from the unsynchronized BS 12 that is received within the detection window of the MS 2 in the solution of the prior art, because of propagation delay such as $0.1\mu s$ between the unsynchronized BS 12 and the MS 2, data block (shown as "⊠" in Fig. 4) with the length of $0.1\mu s$ falls outside of the detection window of the MS 2 in the solution of the prior art. After using the solution of the present invention, because head data block (shown as "▦" in Fig. 4) corresponding to the length of $0.1\mu s$ in DL data sent by the unsynchronized BS 12 is sent by the synchronized BS 11 instead of the unsynchronized BS 12 at the start time slot of the length of $0.1\mu s$ for sending DL data simultaneously when the synchronized BS 11 sending DL data, and DL data that is sent to the MS 2 by the unsynchronized BS 12 is the DL data with head data block corresponding to the length of $0.1\mu s$ clipped. Therefore, it may be seen from the solution of the present invention of the lower portion of the second row that DL data (namely DL data with head data block corresponding to the length of $0.1\mu s$ clipped) that is received from the unsynchronized BS 12 by the MS 2 falls within the detection window of the MS 2 completely. And the head data block sent by the synchronized BS 11 instead of the unsynchronized BS 12 falls within the detection window of the MS 2, the head data block being denoted by "▦" corresponding to the first row in Fig.4.

Furthermore, the aforesaid processing is multiplying the head data block to be transmitted by the channel transmission matrix of the DL channel from the unsynchronized BS 12 to the MS 2 and the precoding matrix of the unsynchronized BS 12, as well as the inverse matrix of the channel transmission matrix of the DL channel from the synchronized BS 11 to the MS 2 and the inverse matrix of the precoding matrix of the synchronized BS 11.

To be specific, assuming that DL data to be transmitted of the unsynchronized BS 12 is $S_2$, wherein the head data block sent by the synchronized BS 11 instead of the unsynchronized BS 12 is $S_{21}$, the remaining data block is $S_{22}$, wherein $S_2 = S_{21} + S_{22}$.

Before sending to the MS 2 the head data block $S_{21}$ of the unsynchronized BS 12, the synchronized BS 11 firstly processes the head data block $S_{21}$, that is, the head data block $S_{21}$ is transformed into $F_1^{-1}H_1^{-1}H_2F_2S_{21}$, wherein, $F_1^{-1}$ is the inverse matrix of the precoding matrix of the synchronized BS 11, $H_1^{-1}$ is the inverse matrix of the channel transmission matrix of the DL channel from the synchronized BS 11 to the MS 2, $H_2$ is the channel transmission matrix of the DL channel from the unsynchronized BS 12 to the MS 2, and $F_2$ is the precoding matrix of the unsynchronized BS 12.

Because the synchronized BS 11 sends the processed head data block $F_1^{-1}H_1^{-1}H_2F_2S_{21}$ to the MS 2, and the unsynchronized BS 12 sends to the MS 2 the remaining data $S_{22}$ with the head data block clipped, for the MS 2, the received data of the MS 2 is $y_2 = H_1F_1F_1^{-1}H_1^{-1}H_2F_2S_{21} + H_2F_2S_{22} = H_2F_2S_2$, that is, all of DL data belonging to the unsynchronized BS 12.

Here, it is to be noted that, if the transmission manner of transmission diversity is used between BS and MS, then the synchronized BS 11 may send the processed head data block of the unsynchronized BS 12 by using the antenna for sending its own DL data; but if the transmission manner of space multiplexing is used between BS and MS, the synchronized BS 11 should use extra transmitting antenna to transmit the processed head data block of the unsynchronized BS 12.

Similarly, Because out-of-synchronization information corresponding to the unsynchronized BS 13 is less than 0, in the step S 14, when sending DL data to the MS 2, the synchronized BS 11 processes tail data block corresponding to the length of the out-of-synchronization information in DL data sent by the unsynchronized BS 13 and sends the processed tail data block to the MS 2 at a specific time slot simultaneously.

Wherein, the specific time slot is the final time slot, lasting the length of the out-of-synchronization information, within the time slot occupied by the synchronized base station 11 for sending DL signal.

Accordingly, the unsynchronized BS 13 postpones the transmission starting moment for the length of the out-of-synchronization information and then sends to the MS 2 DL data to be transmitted with the tail data block corresponding to the length of the out-of-synchronization information clipped.

For example, if the out-of-synchronization information of the unsynchronized BS 13 and the MS 2 is -0.1μs, then when sending DL data to the MS 2, the synchronized BS 11 processes tail data block corresponding to the length of 0.1μs in DL data sent by the unsynchronized BS 13 and sends the processed tail data block to the MS 2 at the final time slot of the length of 0.1μs for sending DL data simultaneously.

Accordingly, the unsynchronized BS 13 postpones the transmission starting moment for the length of 0.1μs and then sends to the MS 2 DL data to be transmitted with the tail data block corresponding to the length of 0.1μs clipped.

It may be seen from Fig.4 that the upper portion of the third row corresponds to DL data from the unsynchronized BS 13 that is received within the detection window of the MS 2 in the solution of the prior art, because of propagation delay such as -0.1μs between the unsynchronized BS 13 and the MS 2, data block (shown as " " in Fig. 4) with the length of 0.1μs falls outside of the detection window of the MS 2 in the solution of the prior art. After using the solution of the present invention, because tail data block (shown as " " in Fig. 4) corresponding to the length of 0.1μs in DL data sent by the unsynchronized BS 13 is sent by the synchronized BS 11 instead of the unsynchronized BS 13 at the final time slot of the length of 0.1μs for sending DL data simultaneously when the synchronized BS 11 sends DL data, and the unsynchronized BS 13 postpones the transmission starting moment for the length of 0.1μs and then sends to the MS 2 DL data to be transmitted with tail data block corresponding to the length of 0.1μs clipped. Therefore, it can be seen from the solution of the present invention of the lower portion of the third row that DL data (namely DL data with tail data block corresponding to the length of 0.1μs clipped) that is received from the unsynchronized BS 13 by the MS 2 falls within the detection window of the MS 2 completely. And the tail data block sent by the synchronized BS 11 instead of the unsynchronized BS 13 falls within the detection window of the MS 2, the tail data block being denoted by " " corresponding to the first row in Fig.4.

Furthermore, the aforesaid processing is multiplying the tail data block to be transmitted by the channel transmission matrix of the DL channel from the unsynchronized BS 13 to the MS 2 and the precoding matrix of the unsynchronized BS 13, as well as the inverse matrix of the channel transmission matrix of the DL channel from the synchronized BS 11 to the MS 2 and the inverse matrix of the precoding matrix of the synchronized BS 11.

To be specific, assuming that DL data to be transmitted of the unsynchronized BS 13 is $S_3$, wherein the tail data block sent by the synchronized BS 11 instead of the unsynchronized BS 13 is $S_{31}$, the remaining data block is $S_{32}$, wherein $S_3 = S_{31} + S_{32}$.

Before sending to the MS 2 the tail data block S31 of the unsynchronized BS 13, the synchronized BS 11 firstly processes the tail data block $S_{31}$, that is, the tail data block $S_{31}$ is transformed into $F_1^{-1}H_1^{-1}H_3F_3S_{31}$, wherein, $F_1^{-1}$ is the inverse matrix of the precoding matrix of the synchronized BS 11, $H_1^{-1}$ is the inverse matrix of the channel transmission matrix of the DL channel from the synchronized BS 11 to the MS 2, $H_3$ is the channel transmission matrix of the DL channel from the unsynchronized BS 13 to the MS 2, $F_3$ is the precoding matrix of the unsynchronized BS 13.

Because the synchronized BS 11 sends the processed tail data block $F_1^{-1}H_1^{-1}H_3F_3S_{31}$ to the MS 2, and the unsynchronized BS 13 sends to the MS 2 the remaining data S32 with the tail data block clipped, for the MS 2, the received data of the MS 2 is $y_3 = H_1F_1F_1^{-1}H_1^{-1}H_3F_3S_{31} + H_3F_3S_{32} = H_3F_3S_3$, that is, all of DL data belonging to the unsynchronized BS 13.

Here, it is to be noted that, if the transmission manner of transmission diversity is used between BS and MS, the synchronized BS 11 may send the processed tail data block of the unsynchronized BS 13 by using the antenna for sending its own DL data; but if the transmission manner of space multiplexing is used between BS and MS, the synchronized BS 11 should use extra transmitting antenna to transmit the processed tail data block of the unsynchronized BS 13.

Hereinbefore, the scenario that when sending downlink data to the MS 2, the synchronized BS 11 processes part of data of the unsynchronized BS 12 and the unsynchronized BS 13 and sends the processed part of data to the MS 2 respectively at specific time slots simultaneously is described.

Hereinafter, referring to Fig.2 and Fig.5, the scenarios that when sending DL data to the MS 2, the unsynchronized BS 12 processes part of data of the unsynchronized BS 13 and sends the processed part of data of the unsynchronized BS 13 to the MS 2 at specific time slots simultaneously, and when sending DL data to the MS 2, the synchronized BS 13 processes part of data of the unsynchronized BS 12 and sends the processed part of data of the unsynchronized BS 12 to the MS 2 at specific time slots simultaneously are described.

Fig.5 shows a schematic diagram of the unsynchronized BS 12 processing part of data of the unsynchronized BS 13 and sending the processed part of data of the unsynchronized BS 13 to the MS 2 at specific time slots simultaneously when sending DL data to the MS 2, and the synchronized BS 13 processing part of data of the unsynchronized BS 12 and sending the processed part of data of the unsynchronized BS 12 to the MS 2 at specific time slots simultaneously when sending DL data to the MS 2.

In Fig.5, the first row corresponds to DL data from the synchronized BS 11 that is received within the detection window of the MS 2 in the solution of the present invention. The upper portion of the second row corresponds to DL data from the unsynchronized BS 12 that is received within the detection window of the MS 2 in the solution of the prior art, the lower portion of the second row corresponds to DL data from the unsynchronized BS 12 that is received within the detection window of the MS 2 in the solution of the present invention. The upper portion of the third row corresponds to DL data from the unsynchronized BS 13 that is received within the detection window of the MS 2 in the solution of the prior art, the lower portion of the third row corresponds to DL data from the unsynchronized BS 13 that is received within the detection window of the MS 2 in the solution of the present invention.

For the unsynchronized BS 12, firstly, the unsynchronized BS 12 receives backhaul information from the unsynchronized BS 13 via X2 interface. Wherein, backhaul message that is received from the unsynchronized BS 13 by the unsynchronized BS 12 comprises DL data to be transmitted from the unsynchronized BS 13 to the MS 2, the channel transmission matrix of DL channel from the unsynchronized BS 13 to the MS 2 and out-of-synchronization information of the unsynchronized BS 13 and the MS 2, namely propagation delay from the unsynchronized BS 13 to the MS 2.

Then, the unsynchronized BS 12 determines whether out-of-synchronization information in backhaul information from the unsynchronized BS 13 is greater than 0.

Because the propagation distance from the unsynchronized BS 13 to the MS 2 is less than the propagation distance from the synchronized BS 11 to the MS 2, out-of-synchronization information corresponding to the unsynchronized BS 13 is less than 0.

Because out-of-synchronization information corresponding to the unsynchronized BS 13 is less than 0, when sending DL data to the MS 2, the unsynchronized BS 12 processes tail data block corresponding to the length of the out-of-synchronization information in DL data sent by the unsynchronized BS 13 and sends the processed tail data block to the MS 2 at a specific time slot simultaneously.

Wherein, the specific time slot is the final time slot, lasting the length of the out-of-synchronization information, within the time slot occupied by the synchronized BS 12 for sending DL data.

Accordingly, the unsynchronized BS 13 postpones the transmission starting moment for the length of the out-of-synchronization information and sends to the MS 2 DL data to be transmitted with the tail data block corresponding to the length of the out-of-synchronization information clipped.

For example, if the out-of-synchronization information of the unsynchronized BS 13 and the MS 2 is -0.1μs, then when sending DL data to the MS 2, the unsynchronized BS 12 processes tail data block corresponding to the length of 0.1μs in DL data sent by the unsynchronized BS 13 and sends the processed tail data block to the MS 2 at the final time slot of the length of 0.1μs for sending DL data simultaneously.

Accordingly, the unsynchronized BS 13 postpones the transmission starting moment for the length of 0.1μs and then sends to the MS 2 DL data to be transmitted with the tail data block corresponding to the length of 0.1μs clipped.

It may be seen from Fig. 5 that the upper portion of the third row corresponds to DL data from the unsynchronized BS 13 that received within the detection window of the MS 2 in the solution of the prior art, because of propagation delay such as -0.1μs between the unsynchronized BS 13 and the MS 2, data block (shown as " " in Fig. 5) with the length of 0.1μs falls outside of the detection window of the MS 2 in the solution of the prior art. After using the solution of the present invention, because tail data block (shown as " " in Fig. 5) corresponding to the length of 0.1μs in DL data sent by the unsynchronized BS 13 is sent by the unsynchronized BS 12 instead of the unsynchronized BS 13 at the final time slot of the length of 0.1μs for sending DL data simultaneously when the synchronized BS 12 sends DL data, and the unsynchronized BS 13 postpones the transmission starting moment for the length of 0.1μs and then sends to the MS 2 DL data to be transmitted with tail data block corresponding to the length of 0.1μs clipped. Therefore, it may be seen from the solution of the present invention of the lower portion of the third row that DL data (namely DL data with tail data block corresponding to the length of 0.1μs clipped) that is received from the unsynchronized BS 13 by the MS 2 falls within detection window of the MS 2 completely. And the tail data block sent by the unsynchronized BS 12 instead of the unsynchronized BS 13 falls within the detection window of the MS 2, the tail data block being denoted by " " corresponding to the lower portion of the second row in Fig.5.

Furthermore, the aforesaid processing is that the unsynchronized BS 12 multiplies the tail data block to be transmitted by the channel transmission matrix of the DL channel from the unsynchronized BS 13 to the MS 2 and the precoding matrix of the unsynchronized BS 13, as well as the inverse matrix of the channel transmission matrix of the DL channel from the unsynchronized BS 12 to the MS 2 and the inverse matrix of the precoding matrix of the unsynchronized BS 12.

To be specific, assuming that DL data to be transmitted of the unsynchronized BS 13 is $S_3$, wherein the tail data block sent by the unsynchronized BS 12 instead of the unsynchronized BS 13 is $S_{31}$, the remaining data block is $S_{32}$, wherein $S_3 = S_{31} + S_{32}$.

Before sending to the MS 2 the tail data block $S_{31}$ of the unsynchronized BS 13, the unsynchronized BS 12 firstly processes the tail data block $S_{31}$, that is, the tail data block $S_{31}$ is transformed into $F_2^{-1}H_2^{-1}H_3F_3S_{31}$, wherein, $F_2^{-1}$ is the inverse matrix of the precoding matrix of the unsynchronized BS 12, $H_2^{-1}$ is the inverse matrix of the channel transmission matrix of the DL channel from the unsynchronized BS 12 to the MS 2, $H_3$ is the channel transmission matrix of the DL channel from the unsynchronized BS 13 to the MS 2, $F_3$ is the precoding matrix of the unsynchronized BS 13.

Because the unsynchronized BS 12 sends the processed tail data block $F_2^{-1}H_2^{-1}H_3F_3S_{31}$ to the MS 2, and the unsynchronized BS 13 sends to the MS 2 the remaining data $S_{32}$ with the tail data block clipped, for the MS 2, the received data of the MS 2 is $y_3 = H_2F_2F_2^{-1}H_2^{-1}H_3F_3S_{31} + H_3F_3S_{32} = H_3F_3S_3$, that is, all of DL data belonging to the unsynchronized BS 13.

Here, it is to be noted, if the transmission manner of transmission diversity is used between BS and MS, the unsynchronized BS 12 may send the processed tail data block of the unsynchronized BS 13 by using the antenna for sending its own DL data; but if the transmission manner of space multiplexing is used between BS and MS, the unsynchronized BS 12 should use extra transmitting antenna to transmit the processed tail data block of the unsynchronized BS 13.

Similarly, for the unsynchronized BS 13, firstly, the unsynchronized BS 13 receives backhaul information from the unsynchronized BS 12 via X2 interface. Wherein, backhaul information that is received from the unsynchronized BS 12 by the unsynchronized BS 13 comprises DL data to be transmitted from the unsynchronized BS 12 to the MS 2, the channel transmission matrix of DL channel from the unsynchronized BS 12 to the MS 2 and out-of-synchronization information of the unsynchronized BS 12 and the MS 2, namely propagation delay from the unsynchronized BS 12 to the MS 2.

Then, the unsynchronized BS 13 determines whether out-of-synchronization information in backhaul information from the unsynchronized BS 12 is greater than 0.

Because the propagation distance from the unsynchronized BS 12 to the MS 2 is greater than the propagation distance from the synchronized BS 11 to the MS 2, out-of-synchronization information corresponding to the unsynchronized BS 12 is greater than 0.

Because out-of-synchronization information corresponding to the unsynchronized BS 12 is greater than 0, when sending DL data to the MS 2, the unsynchronized BS 13 processes head data block corresponding to the length of the out-of-synchronization information in DL data sent by the unsynchronized BS 12 and sends the processed head data block to the MS 2 at a specific time slot simultaneously.

Wherein, the specific time slot is the start time slot, lasting the length of the out-of-synchronization information, within the time slot occupied by the synchronized base station 13 for sending DL signal.

Accordingly, the unsynchronized BS 12 sends to the MS 2 DL data to be transmitted with the head data block corresponding to the length of the out-of-synchronization information clipped.

For example, if the out-of-synchronization information of the unsynchronized BS 12 and the MS 2 is $0.1\mu s$, then when sending DL data to the MS 2, the unsynchronized BS 13 processes head data block corresponding to the length of $0.1\mu s$ in DL data sent by the unsynchronized BS 12 and sends the processed head data block to the MS 2 at the start time slot of the length of $0.1\mu s$ for sending DL data simultaneously.

Accordingly, the unsynchronized BS 12 sends to the MS 2 DL data to be transmitted with the head data block corresponding to the length of $0.1\mu s$ clipped.

It may be seen from Fig.5 that the upper portion of the second row corresponds to DL data from the unsynchronized BS 12 that is received within the detection window of the MS 2 in the solution of the prior art, because of propagation delay such as $0.1\mu s$ between the unsynchronized BS 12 and the MS 2, data block (shown as "⊠" in Fig. 5) with the length of $0.1\mu s$ falls outside of the detection window of the MS 2 in the solution of the prior art. After using the solution of the present invention, because head data block (shown as "▦" in Fig. 5) corresponding to the length of $0.1\mu s$ in DL data sent by the unsynchronized BS 12 is sent by the unsynchronized BS 13 instead of the unsynchronized BS 12 at the start time slot of the length of $0.1\mu s$ for sending DL data simultaneously when the unsynchronized BS 13 sends DL data, and DL data that is sent to the MS 2 by the unsynchronized BS 12 is the DL data with head data block corresponding to the length of $0.1\mu s$ clipped. Therefore, it may be seen from the solution of the present invention of the lower portion of the second row that DL data (namely DL data with head data block corresponding to the length of $0.1\mu s$ clipped) that is received from the unsynchronized BS 12 by the MS 2 falls within the detection window of the MS 2 completely. And the head data block sent by the unsynchronized BS 13 instead of the unsynchronized BS 12 falls within the detection window of the MS 2, the head data block being denoted by "▦" corresponding to the lower portion of the third row in Fig.5.

Furthermore, the aforesaid processing is that the unsynchronized BS 13 multiplies the head data block to be transmitted by the channel transmission matrix of the DL channel from the unsynchronized BS 12 to the MS 2 and the precoding matrix of the unsynchronized BS 12, as well as the inverse matrix of the channel transmission matrix of the DL channel from the unsynchronized BS 13 to the MS 2 and the inverse matrix of the precoding matrix of the unsynchronized BS 13.

To be specific, assuming that DL data to be transmitted of the unsynchronized BS 12 is $S_2$, wherein the head data block sent by the unsynchronized BS 13 instead of the unsynchronized BS 12 is $S_{21}$, the remaining data block is $S_{22}$, wherein $S_2 = S_{21} + S_{22}$.

Before sending to the MS 2 the head data block $S_{21}$ of the unsynchronized BS 12, the unsynchronized BS 13 firstly processes the head data block $S_{21}$, that is, the head data block $S_{21}$ is transformed into $F_3^{-1}H_3^{-1}H_2F_2S_{21}$, wherein, $F_3^{-1}$ is the inverse matrix of the precoding matrix of the unsynchronized BS 13, $H_3^{-1}$ is the inverse matrix of the channel transmission matrix of the DL channel from the unsynchronized BS 13 to the MS 2, $H_2$ is the channel transmission matrix of the DL channel from the unsynchronized BS 12 to the MS 2, $F_2$ is the precoding matrix of the unsynchronized BS 12.

Because the unsynchronized BS 13 sends the processed head data block $F_3^{-1}H_3^{-1}H_2F_2S_{21}$ to the MS 2, and the unsynchronized BS 12 sends to the MS 2 the remaining data $S_{22}$ with the head data block clipped, for the MS 2, the received data of the MS 2 is $y_2 = H_3F_3F_3^{-1}H_3^{-1}H_2F_2S_{21} + H_2F_2S_{22} = H_2F_2S_2$, that is, all of DL data belonging to the unsynchronized BS 12.

Here, it is to be noted that, if the transmission manner of transmission diversity is used between BS and MS, the unsynchronized BS 13 may send the processed head data block of the unsynchronized BS 12 by using the antenna for sending its own DL data; but if the transmission manner of space multiplexing is used between BS and MS, the unsynchronized BS 13 should use extra transmitting antenna to transmit the processed head data block of the unsynchronized BS 12.

In a variation shown in Fig.6, an unsynchronized BS 14 is included, and the propagation distance from the unsynchronized BS 14 to the MS 2 is greater than the propagation distance from the unsynchronized BS 12 to the MS 2.

Assuming that out-of-synchronization information corresponding to the unsynchronized BS 12 is $0.1\mu s$ and out-of-synchronization information corresponding to the unsynchronized BS 14 is $0.2\mu s$. it may be known from the aforesaid description of the solution of the present invention that the head data block corresponding to the length of $0.2\mu s$ in DL data to be transmitted of the unsynchronized BS 14 may be sent to the MS 2 at a specific time slot by the synchronized BS 11 simultaneously when the synchronized BS 11 sends DL data, and may also be sent to the MS 2 at a specific time slot by the unsynchronized BS 13 simultaneously when the unsynchronized BS 13 sends DL data.

Certainly, those skilled in the art may understand that the latter $0.1\mu s$ data block (shown as " " in Fig.6) in the head data block corresponding to the length of $0.2\mu s$ may be sent to the MS 2 by the unsynchronized BS 12 at the start time slot of the length of $0.1\mu s$ for sending DL data simultaneously when the unsynchronized BS 12 sends DL data, and the former $0.1\mu s$ data block (shown as " " in Fig.6) in the head data block corresponding to the length of $0.2\mu s$ may be sent to the MS 2 by the synchronized BS 11 or the unsynchronized BS 13 at the start time slot of the length of $0.1\mu s$ for sending DL data simultaneously when the synchronized BS 11 or the unsynchronized BS 13 sends DL data.

Hereinbefore, the solution of the present invention is described from the aspect of method; hereinafter the solution of the present invention will be further described from the aspect of device module.

Hereinafter, referring to Fig.2, Fig.4 and Fig.7, the scenario that when sending downlink data to the MS 2, a control device 100 in the synchronized BS 11 processes part of data of the unsynchronized BS 12 and the unsynchronized BS 13 and sends the processed part of data to the MS 2 respectively at specific time slots simultaneously is described. The descriptions for Fig.2 and Fig.4 in the preceding context are taken as reference together.

Fig.7 shows a block diagram of structure of a control device 100 in the synchronized BS 11 for processing part of data of the unsynchronized BS 12 and the unsynchronized BS 13 and sending the processed part of data to the MS 2 at different time slots simultaneously, when sending downlink data to the MS 2, according to one embodiment of the present invention.

As shown in Fig.7, firstly, a first receiving means 1001 in control device 100 in the synchronized BS 11 respectively receives backhaul information from the unsynchronized BS 12 and the unsynchronized BS 13 via X2 interface. Wherein, backhaul message that is received from the unsynchronized BS 12 by the first receiving means 1001 comprises DL data to be transmitted from the unsynchronized BS 12 to the MS 2, the channel transmission matrix of DL channel from the unsynchronized BS 12 to the MS 2 and out-of-synchronization information of the unsynchronized BS 12 and the MS 2, namely propagation delay from the unsynchronized BS 12 to the MS 2; backhaul message that is received from the unsynchronized BS 13 by the first receiving means 1001 comprises DL data to be transmitted from the unsynchronized BS 13 to the MS 2, the channel transmission matrix of DL channel from the unsynchronized BS 13 to the MS 2 and out-of-synchronization information of the unsynchronized BS 13 and the MS 2, namely propagation delay from the unsynchronized BS 13 to the MS 2.

Then, a first determining means 1002 in the control device 100 in the synchronized BS 11 respectively determines whether out-of-synchronization information in backhaul information from the unsynchronized BS 12 and the unsynchronized BS 13 is greater than 0.

Because the MS 2 and the synchronized BS 11 achieve synchronization, out-of-synchronization information from the synchronized BS 11 to the MS 2 is considered as 0. And because the propagation distance from the unsynchronized BS 12 to the MS 2 is greater than the propagation distance from the synchronized BS 11 to the MS 2, out-of-synchronization information corresponding to the unsynchronized BS 12 is greater than 0; and because the propagation distance from the unsynchronized BS 13 to the MS 2 is less than the propagation distance from the synchronized BS 11 to the MS 2, out-of-synchronization information corresponding to the unsynchronized BS 13 is less than 0.

Because out-of-synchronization information corresponding to the unsynchronized BS 12 is greater than 0, when sending DL data to the MS 2, a first sending means 1003 in the control device 100 in the synchronized BS 11 processes head data block corresponding to the length of the out-of-synchronization information in DL data sent by the unsynchronized BS 12 and sends the processed head data block to the MS 2 at a specific time slot simultaneously.

Wherein, the specific time slot is the start time slot, lasting the length of the out-of-synchronization information, within the time slot occupied by the first sending means 1003 in the synchronized base station 11 for sending DL data.

Accordingly, a fourth sending means in a first assisting control device in the unsynchronized BS 12 sends to the MS 2 DL data to be transmitted with the head data block corresponding to the length of the out-of-synchronization information clipped.

For example, if the out-of-synchronization information of the unsynchronized BS 12 and the MS 2 is $0.1\mu s$, then when sending DL data to the MS 2, the first sending means 1003 in the synchronized BS 11 processes head data block corresponding to the length of $0.1\mu s$ in DL data sent by the unsynchronized BS 12 and sends the processed head data block to the MS 2 at the start time slot of the length of $0.1\mu s$ for sending DL data simultaneously.

Accordingly, the fourth sending means in the first assisting control device in the unsynchronized BS 12 sends to the MS 2 DL data to be transmitted with the head data block corresponding to the length of $0.1\mu s$ clipped.

It may be seen from Fig.4 that the upper portion of the second row corresponds to DL data from the unsynchronized BS 12 that is received within the detection window of the MS 2 in the solution of the prior art, because of propagation delay such as $0.1\mu s$ between the unsynchronized BS 12 and the MS 2, data block (shown as " ▨ " in Fig. 4) with the length of $0.1\mu s$ falls outside of the detection window of the MS 2 in the solution of the prior art. After using the solution of the present invention, because head data block (shown as " ▦ " in Fig. 4) corresponding to the length of $0.1\mu s$ in DL data sent by the unsynchronized BS 12 is sent by the first sending means 1003 in the synchronized BS 11 instead of the unsynchronized BS 12 at the start time slot of the length of $0.1\mu s$ for sending DL data simultaneously when the synchronized BS 11 sends DL data, and DL data that is sent to the MS 2 by the fourth sending means in the first assisting control device in the unsynchronized BS 12 is the DL data with head data block corresponding to the length of $0.1\mu s$ clipped. Therefore, it may be seen from the solution of the present invention of the lower portion of the second row that DL data (namely DL data with head data block corresponding to the length of $0.1\mu s$ clipped) that is received from the unsynchronized BS 12 by the MS 2 falls within the detection window of the MS 2 completely. And the head data block sent by the first sending means 1003 in the synchronized BS 11 instead of the unsynchronized BS 12 falls within the detection window of the MS 2, the head data block being denoted by " ▤ " corresponding to the first row in Fig.4.

Furthermore, the aforesaid processing is multiplying the head data block to be transmitted by the channel transmission matrix of the DL channel from the unsynchronized BS 12 to the MS 2 and the precoding matrix of the unsynchronized BS 12, as well as the inverse matrix of the channel transmission matrix of the DL channel from the synchronized BS 11 to the MS 2 and the inverse matrix of the precoding matrix of the synchronized BS 11.

To be specific, assuming that DL data to be transmitted of the unsynchronized BS 12 is $S_2$, wherein the head data block sent by the first sending means 1003 in the synchronized BS 11 instead of the unsynchronized BS 12 is $S_{21}$, the remaining data block is $S_{22}$, wherein $S_2 = S_{21} + S_{22}$.

Before sending to the MS 2 the head data block $S_{21}$ of the unsynchronized BS 12, the first sending means 1003 in the synchronized BS 11 firstly processes the head data block S21, that is, the head data block $S_{21}$ is transformed into $F_1^{-1}H_1^{-1}H_2F_2S_{21}$ , wherein, $F_1^{-1}$ is the inverse matrix of the precoding matrix of the synchronized BS 11, $H_1^{-1}$ is the inverse matrix of the channel transmission matrix of the DL channel from the synchronized BS 11 to the MS 2, $H_2$ is the channel transmission matrix of the DL channel from the unsynchronized BS 12 to the MS 2, and $F_2$ is the precoding matrix of the unsynchronized BS 12.

Because the first sending means 1003 in the synchronized BS 11 sends the processed head data block $F_1^{-1}H_1^{-1}H_2F_2S_{21}$ to the MS 2, and the fourth sending means in a first assisting control device in the unsynchronized BS 12 sends to the MS 2 the remaining data $S_{22}$ with the head data block clipped, for the MS 2, the received data of the MS 2 is $y_2 = H_1F_1F_1^{-1}H_1^{-1}H_2F_2S_{21} + H_2F_2S_{22} = H_2F_2S_2$, that is, all of DL data belonging to the unsynchronized BS 12.

Here, it is to be noted that, if the transmission manner of transmission diversity is used between BS and MS, then the synchronized BS 11 may send the processed head data block of the unsynchronized BS 12 by using the antenna for sending its own DL data; but if the transmission manner of space multiplexing is used between BS and MS, the synchronized BS 11 should use extra transmitting antenna to transmit the processed head data block of the unsynchronized BS 12.

Similarly, Because out-of-synchronization information corresponding to the unsynchronized BS 13 is less than 0, when sending DL data to the MS 2, the first sending means 1003 in the control device 100 in the synchronized BS 11 processes tail data block corresponding to the length of the out-of-synchronization information in DL data sent by the unsynchronized BS 13 and sends the processed tail data block to the MS 2 at a specific time slot simultaneously.

Wherein, the specific time slot is the final time slot, lasting the length of the out-of-synchronization information, within the time slot occupied by the first sending means 1003 in the synchronized base station 11 for sending DL signal.

Accordingly, a fifth sending means in a second assisting control device in the unsynchronized BS 13 postpones the transmission starting moment for the length of the out-of-synchronization information and then sends to the MS 2 DL data to be transmitted with the tail data block corresponding to the length of the out-of-synchronization information clipped.

For example, if the out-of-synchronization information of the unsynchronized BS 13 and the MS 2 is -0.1μs, then when sending DL data to the MS 2, the first sending means 1003 in the synchronized BS 11 processes tail data block corresponding to the length of 0.1μs in DL data sent by the unsynchronized BS 13 and sends the processed tail data block to the MS 2 at the final time slot of the length of 0.1μs for sending DL data simultaneously.

Accordingly, the fifth sending means in the second assisting control device in the unsynchronized BS 13 postpones the transmission starting moment for the length of 0.1μs and then sends to the MS 2 DL data to be transmitted with the tail data block corresponding to the length of 0.1μs clipped.

It may be seen from Fig.4 that the upper portion of the third row corresponds to DL data from the unsynchronized BS 13 that is received within the detection window of the MS 2 in the solution of the prior art, because of propagation delay such as -0.1μs between the unsynchronized BS 13 and the MS 2, data block (shown as " " in Fig. 4) with the length of 0.1μs falls outside of the detection window of the MS 2 in the solution of the prior art. After using the solution of the present invention, because tail data block (shown as " " in Fig. 4) corresponding to the length of 0.1μs in DL data sent by the unsynchronized BS 13 is sent by the first sending means 1003 in the synchronized BS 11 instead of the unsynchronized BS 13 at the final time slot of the length of 0.1μs for sending DL data simultaneously when the synchronized BS 11 sends DL data, and the fifth sending means in the second assisting control device in the unsynchronized BS 13 postpones the transmission starting moment for the length of 0.1μs and then sends to the MS 2 DL data to be transmitted with tail data block corresponding to the length of 0.1μs clipped. Therefore, it can be seen from the solution of the present invention of the lower portion of the third row that DL data (namely DL data with tail data block corresponding to the length of 0.1μs clipped) that is received from the unsynchronized BS 13 by the MS 2 falls within the detection window of the MS 2 completely. And the tail data block sent by the first sending means 1003 in the synchronized BS 11 instead of the unsynchronized BS 13 falls within the detection window of the MS 2, the tail data block being denoted by " " corresponding to the first row in Fig.4.

Furthermore, the aforesaid processing is multiplying the tail data block to be transmitted by the channel transmission matrix of the DL channel from the unsynchronized BS 13 to the MS 2 and the precoding matrix of the unsynchronized BS 13, as well as the inverse matrix of the channel transmission matrix of the DL channel from the synchronized BS 11 to the MS 2 and the inverse matrix of the precoding matrix of the synchronized BS 11.

To be specific, assuming that DL data to be transmitted of the unsynchronized BS 13 is $S_3$, wherein the tail data block sent by the first sending means 1003 in the synchronized BS 11 instead of the unsynchronized BS 13 is $S_{31}$, the remaining data block is $S_{32}$, wherein $S_3 = S_{31} + S_{32}$.

Before sending to the MS 2 the tail data block S31 of the unsynchronized BS 13, the first sending means 1003 in the synchronized BS 11 firstly processes the tail data block $S_{31}$, that is, the tail data block $S_{31}$ is transformed into

$F_1^{-1}H_1^{-1}H_3F_3S_{31}$, wherein, $F_1^{-1}$ is the inverse matrix of the precoding matrix of the synchronized BS 11, $H_1^{-1}$ is the inverse matrix of the channel transmission matrix of the DL channel from the synchronized BS 11 to the MS 2, $H_3$ is the channel transmission matrix of the DL channel from the unsynchronized BS 13 to the MS 2, $F_3$ is the precoding matrix of the unsynchronized BS 13.

Because the first sending means 1003 in the synchronized BS 11 sends the processed tail data block $F_1^{-1}H_1^{-1}H_3F_3S_{31}$ to the MS 2, and the fifth sending means in the second assisting control device in the unsynchronized BS 13 sends to the MS 2 the remaining data S32 with the tail data block clipped, for the MS 2, the received data of the MS 2 is $\mathrm{y}_3 = H_1F_1F_1^{-1}H_1^{-1}H_3F_3S_{31} + H_3F_3S_{32} = H_3F_3S_3$, that is, all of DL data belonging to the unsynchronized BS 13.

Here, it is to be noted that, if the transmission manner of transmission diversity is used between BS and MS, the synchronized BS 11 may send the processed tail data block of the unsynchronized BS 13 by using the antenna for sending its own DL data; but if the transmission manner of space multiplexing is used between BS and MS, the synchronized BS 11 should use extra transmitting antenna to transmit the processed tail data block of the unsynchronized BS 13.

Hereinbefore, the scenario that when sending downlink data to the MS 2, the control device 100 in the synchronized BS 11 processes part of data of the unsynchronized BS 12 and the unsynchronized BS 13 and sends the processed part of data to the MS 2 respectively at specific time slots simultaneously is described.

Hereinafter, referring to Fig.2 and Fig.5, the scenarios that when sending DL data to the MS 2, the unsynchronized BS 12 processes part of data of the unsynchronized BS 13 and sends the processed part of data of the unsynchronized BS 13 to the MS 2 at specific time slots simultaneously, and when sending DL data to the MS 2, the synchronized BS 13 processes part of data of the unsynchronized BS 12 and sends the processed part of data of the unsynchronized BS 12 to the MS 2 at specific time slots simultaneously are described.

The descriptions for Fig.2 and Fig.5 in the preceding contexts are taken as reference together.

For the unsynchronized BS 12, firstly, a second receiving means in a control device in the unsynchronized BS 12 receives backhaul information from the unsynchronized BS 13 via X2 interface. Wherein, backhaul message that is received from the unsynchronized BS 13 by the second receiving means in the control device in the unsynchronized BS 12 comprises DL data to be transmitted from the unsynchronized BS 13 to the MS 2, the channel transmission matrix of DL channel from the unsynchronized BS 13 to the MS 2 and out-of-synchronization information of the unsynchronized BS 13 and the MS 2, namely propagation delay from the unsynchronized BS 13 to the MS 2.

Then, a second determining means in the control device in the unsynchronized BS 12 determines whether out-of-synchronization information in backhaul information from the unsynchronized BS 13 is greater than 0.

Because the propagation distance from the unsynchronized BS 13 to the MS 2 is less than the propagation distance from the synchronized BS 11 to the MS 2, out-of-synchronization information corresponding to the unsynchronized BS 13 is less than 0.

Because out-of-synchronization information corresponding to the unsynchronized BS 13 is less than 0, when sending DL data to the MS 2, a second sending means in the control device in the unsynchronized BS 12 processes tail data block corresponding to the length of the out-of-synchronization information in DL data sent by the unsynchronized BS 13 and sends the processed tail data block to the MS 2 at a specific time slot simultaneously.

Wherein, the specific time slot is the final time slot, lasting the length of the out-of-synchronization information, within the time slot occupied by the second sending means in the control device in the synchronized BS 12 for sending DL data.

Accordingly, the fifth sending means in the second assisting control device in the unsynchronized BS 13 postpones the transmission starting moment for the length of the out-of-synchronization information and sends to the MS 2 DL data to be transmitted with the tail data block corresponding to the length of the out-of-synchronization information clipped.

For example, if the out-of-synchronization information of the unsynchronized BS 13 and the MS 2 is -0.1μs, then when sending DL data to the MS 2, the second sending means in the control device in the unsynchronized BS 12 processes tail data block corresponding to the length of 0.1μs in DL data sent by the unsynchronized BS 13 and sends the processed tail data block to the MS 2 at the final time slot of the length of 0.1μs for sending DL data simultaneously.

Accordingly, the fifth sending means in the second assisting control device in the unsynchronized BS 13 postpones the transmission starting moment for the length of 0.1μs and then sends to the MS 2 DL data to be transmitted with the tail data block corresponding to the length of 0.1μs clipped.

It may be seen from Fig.5 that the upper portion of the third row corresponds to DL data from the unsynchronized BS 13 that received within the detection window of the MS 2 in the solution of the prior art, because of propagation delay such as -0.1μs between the unsynchronized BS 13 and the MS 2, data block (shown as " ▨ " in Fig. 5) with the length of 0.1μs falls outside of the detection window of the MS 2 in the solution of the prior art. After using the solution of the present invention, because tail data block (shown as " ▨ " in Fig. 5) corresponding to the length of 0.1μs in DL data sent by the unsynchronized BS 13 is sent by the second sending means in the control device in the unsynchronized BS 12 instead of the unsynchronized BS 13 at the final time slot of the length of 0.1μs for sending DL data simultaneously when the synchronized BS 12 sends DL data, and the fifth sending means in the second assisting control device in the unsynchronized BS 13 postpones the transmission starting moment for the length of 0.1μs and then sends to the MS 2 DL data to be transmitted with tail data block corresponding to the length of 0.1μs clipped. Therefore, it may be seen from the solution of the present invention of the lower portion of the third row that DL data (namely DL data with tail data block corresponding to the length of 0.1μs clipped) that is received from the unsynchronized BS 13 by the MS 2 falls within detection window of the MS 2 completely. And the tail data block sent by the second sending means in the control device in the unsynchronized BS 12 instead of the unsynchronized BS 13 falls within the detection window of the MS 2, the tail data block being denoted by " ▨ " corresponding to the lower portion of the second row in Fig.5.

Furthermore, the aforesaid processing is that the second sending means in the control device in the unsynchronized BS 12 multiplies the tail data block to be transmitted by the channel transmission matrix of the DL channel from the unsynchronized BS 13 to the MS 2 and the precoding matrix of the unsynchronized BS 13, as well as the inverse matrix of the channel transmission matrix of the DL channel from the unsynchronized BS 12 to the MS 2 and the inverse matrix of the precoding matrix of the unsynchronized BS 12.

To be specific, assuming that DL data to be transmitted of the unsynchronized BS 13 is $S_3$, wherein the tail data block sent by the second sending means in the control device in the unsynchronized BS 12 instead of the unsynchronized BS 13 is $S_{31}$, the remaining data block is $S_{32}$, wherein $S_3 = S_{31} + S_{32}$. Before sending to the MS 2 the tail data block $S_{31}$ of the unsynchronized BS 13, the second sending means in the control device in the unsynchronized BS 12 firstly processes the tail data block $S_{31}$, that is, the tail data block $S_{31}$ is transformed into $F_2^{-1}H_2^{-1}H_3F_3S_{31}$, wherein, $F_2^{-1}$ is the inverse matrix of the precoding matrix of the unsynchronized BS 12, $H_2^{-1}$ is the inverse matrix of the channel transmission matrix of the DL channel from the unsynchronized BS 12 to the MS 2, $H_3$ is the channel transmission matrix of the DL channel from the unsynchronized BS 13 to the MS 2, $F_3$ is the precoding matrix of the unsynchronized BS 13.

Because the second sending means in the control device in the unsynchronized BS 12 sends the processed tail data block $F_2^{-1}H_2^{-1}H_3F_3S_{31}$ to the MS 2, and the fifth sending means in the second assisting control device in the unsynchronized BS 13 sends to the MS 2 the remaining data $S_{32}$ with the tail data block clipped, for the MS 2, the received data of the MS 2 is $y_3 = H_2F_2F_2^{-1}H_2^{-1}H_3F_3S_{31} + H_3F_3S_{32} = H_3F_3S_3$, that is, all of DL data belonging to the unsynchronized BS 13.

Here, it is to be noted, if the transmission manner of transmission diversity is used between BS and MS, the unsynchronized BS 12 may send the processed tail data block of the unsynchronized BS 13 by using the antenna for sending its own DL data; but if the transmission manner of space multiplexing is used between BS and MS, the unsynchronized BS 12 should use extra transmitting antenna to transmit the processed tail data block of the unsynchronized BS 13.

Similarly, for the unsynchronized BS 13, firstly, a third receiving means in the control device in the unsynchronized BS 13 receives backhaul information from the unsynchronized BS 12 via X2 interface. Wherein, backhaul information that is received from the unsynchronized BS 12 by the third receiving means in the control device in the unsynchronized BS 13 comprises DL data to be transmitted from the unsynchronized BS 12 to the MS 2, the channel transmission matrix of DL channel from the unsynchronized BS 12 to the MS 2 and out-of-synchronization information of the unsynchronized BS 12 and the MS 2, namely propagation delay from the unsynchronized BS 12 to the MS 2.

Then, a third determining means in the control device in the unsynchronized BS 13 determines whether out-of-synchronization information in backhaul information from the unsynchronized BS 12 is greater than 0.

Because the propagation distance from the unsynchronized BS 12 to the MS 2 is greater than the propagation distance from the synchronized BS 11 to the MS 2, out-of-synchronization information corresponding to the unsynchronized BS 12 is greater than 0.

Because out-of-synchronization information corresponding to the unsynchronized BS 12 is greater than 0, when sending DL data to the MS 2, a third sending means in the control device in the unsynchronized BS 13 processes head data block corresponding to the length of the out-of-synchronization information in DL data sent by the unsynchronized BS 12 and sends the processed head data block to the MS 2 at a specific time slot simultaneously.

Wherein, the specific time slot is the start time slot, lasting the length of the out-of-synchronization information, within the time slot occupied by the third sending means in the control device in the synchronized base station 13 for sending DL signal.

Accordingly, the fourth sending means in the first assisting control device in the unsynchronized BS 12 sends to the MS 2 DL data to be transmitted with the head data block corresponding to the length of the out-of-synchronization information clipped.

For example, if the out-of-synchronization information of the unsynchronized BS 12 and the MS 2 is $0.1\mu$s, then when sending DL data to the MS 2, the third sending means in the control device in the unsynchronized BS 13 processes head data block corresponding to the length of $0.1\mu$s in DL data sent by the unsynchronized BS 12 and sends the processed head data block to the MS 2 at the start time slot of the length of $0.1\mu$s for sending DL data simultaneously.

Accordingly, the fourth sending means in the first assisting control device in the unsynchronized BS 12 sends to the MS 2 DL data to be transmitted with the head data block corresponding to the length of $0.1\mu$s clipped.

It may be seen from Fig.5 that the upper portion of the second row corresponds to DL data from the unsynchronized BS 12 that is received within the detection window of the MS 2 in the solution of the prior art, because of propagation delay such as 0.1μs between the unsynchronized BS 12 and the MS 2, data block (shown as "⊠" in Fig. 5) with the length of 0.1μs falls outside of the detection window of the MS 2 in the solution of the prior art. After using the solution of the present invention, because head data block (shown as "▨" in Fig. 5) corresponding to the length of 0.1μs in DL data sent by the unsynchronized BS 12 is sent by the third sending means in the control device in the unsynchronized BS 13 instead of the unsynchronized BS 12 at the start time slot of the length of 0.1μs for sending DL data simultaneously when the unsynchronized BS 13 sends DL data, and DL data that is sent to the MS 2 by the fourth sending means in the first assisting control device in the unsynchronized BS 12 is the DL data with head data block corresponding to the length of 0.1μs clipped. Therefore, it may be seen from the solution of the present invention of the lower portion of the second row that DL data (namely DL data with head data block corresponding to the length of 0.1μs clipped) that is received from the unsynchronized BS 12 by the MS 2 falls within the detection window of the MS 2 completely. And the head data block sent by the third sending means in the control device in the unsynchronized BS 13 instead of the unsynchronized BS 12 falls within the detection window of the MS 2, the head data block being denoted by "▨" corresponding to the lower portion of the third row in Fig.5.

Furthermore, the aforesaid processing is that the third sending means in the control device in the unsynchronized BS 13 multiplies the head data block to be transmitted by the channel transmission matrix of the DL channel from the unsynchronized BS 12 to the MS 2 and the precoding matrix of the unsynchronized BS 12, as well as the inverse matrix of the channel transmission matrix of the DL channel from the unsynchronized BS 13 to the MS 2 and the inverse matrix of the precoding matrix of the unsynchronized BS 13.

To be specific, assuming that DL data to be transmitted of the unsynchronized BS 12 is $S_2$, wherein the head data block sent by the third sending means in the control device in the unsynchronized BS 13 instead of the unsynchronized BS 12 is $S_{21}$, the remaining data block is $S_{22}$, wherein $S_2 = S_{21} + S_{22}$. Before sending to the MS 2 the head data block $S_{21}$ of the unsynchronized BS 12, the third sending means in the control device in the unsynchronized BS 13 firstly processes the head data block $S_{21}$, that is, the head data block $S_{21}$ is transformed into $F_3^{-1} H_3^{-1} H_2 F_2 S_{21}$, wherein, $F_3^{-1}$ is the inverse matrix of the precoding matrix of the unsynchronized BS 13, $H_3^{-1}$ is the inverse matrix of the channel transmission matrix of the DL channel from the unsynchronized BS 13 to the MS 2, $H_2$ is the channel transmission matrix of the DL channel from the unsynchronized BS 12 to the MS 2, $F_2$ is the precoding matrix of the unsynchronized BS 12.

Because the third sending means in the control device in the unsynchronized BS 13 sends the processed head data block $F_3^{-1} H_3^{-1} H_2 F_2 S_{21}$ to the MS 2, and the fourth sending means in the first assisting control device in the unsynchronized BS 12 sends to the MS 2 the remaining data $S_{22}$ with the head data block clipped, for the MS 2, the received data of the MS 2 is $y_2 = H_3 F_3 F_3^{-1} H_3^{-1} H_2 F_2 S_{21} + H_2 F_2 S_{22} = H_2 F_2 S_2$, that is, all of DL data belonging to the unsynchronized BS 12.

Here, it is to be noted that, if the transmission manner of transmission diversity is used between BS and MS, the unsynchronized BS 13 may send the processed head data block of the unsynchronized BS 12 by using the antenna for sending its own DL data; but if the transmission manner of space multiplexing is used between BS and MS, the unsynchronized BS 13 should use extra transmitting antenna to transmit the processed head data block of the unsynchronized BS 12.

The detailed embodiments of the present invention are described hereinbefore, it needs to be understood that the present invention is not limited to the aforesaid specific embodiments, those skilled in the art may make all kinds of variation or modification within the scope of the appended claims.

## Claims

1. A method of controlling propagation delay in a base station of a wireless communication system based on COMP transmission, the method comprising the steps of: when sending downlink data to a mobile station, processing part of data of one or more other unsynchronized base stations and sending the processed part of data to the mobile station at one or more specific time slots simultaneously.

2. The method of claim 1, wherein when the base station is a synchronized base station, the method comprises the steps of:

a. receiving one or more backhaul messages respectively from the one or more other unsynchronized base stations through X2 interface;

b. determining whether out-of-synchronization information in each of the one or more backhaul messages is greater than 0 respectively;

c. if out-of-synchronization information corresponding to an unsynchronized base station is greater than 0, then when sending downlink data to the mobile station, processing head data block corresponding to the length of the out-of-synchronization information in downlink data sent by the unsynchronized base station and sending the processed head data block to the mobile station at a specific time slot simultaneously, wherein the specific time slot is the start time slot, lasting the length of the out-of-synchronization information, within the time slot occupied by the synchronized base station for sending downlink signal;

d. if out-of-synchronization information corresponding to an unsynchronized base station is less than 0, then when sending downlink data to the mobile station, processing tail data block corresponding to the length of the out-of-synchronization information in downlink data sent by the unsynchronized base station and sending the processed tail data block to the mobile station at a specific time slot simultaneously, wherein the specific time slot is the final time slot, lasting the length of the out-of-synchronization information, within the time slot occupied by the synchronized base station for sending downlink signal.

3. The method of claim 2, wherein the step of processing the head/tail data block comprises: multiplying the head/tail data block to be transmitted by the channel transmission matrix of the downlink channel from the unsynchronized base station to the mobile station and the precoding matrix of the unsynchronized base station, as well as the inverse matrix of the channel transmission matrix of the downlink channel from the synchronized base station to the mobile station and the inverse matrix of the precoding matrix of the synchronized base station.

4. The method of claim 1, wherein when the base station is an unsynchronized base station and out-of-synchronization information corresponding to the unsynchronized base station is greater than 0, the method comprises the steps of:

i. receiving one or more backhaul messages respectively from one or more other unsynchronized base stations through X2 interface;

ii. determining whether out-of-synchronization information in each of the one or more backhaul messages is less than 0 respectively;

iii. if out-of-synchronization information corresponding to an other unsynchronized base station is less than 0, then when sending downlink data to the mobile station, processing tail data block corresponding to the length of the out-of-synchronization information in downlink data sent by the other unsynchronized base station and sending the processed tail data block to the mobile station at a specific time slot, wherein the specific time slot is the final time slot, lasting the length of the out-of-synchronization information, within the time slot occupied by the unsynchronized base station for sending downlink signal.

5. The method of claim 4, wherein the step of processing the tail data block comprises: multiplying the tail data block to be transmitted by the channel transmission matrix of the downlink channel from the other unsynchronized base station to the mobile station and the precoding matrix of the other unsynchronized base station, as well as the inverse matrix of the channel transmission matrix of the downlink channel from the unsynchronized base station to the mobile station and the inverse matrix of the precoding matrix of the unsynchronized base station.

6. The method of claim 1, wherein when the base station is an unsynchronized base station and out-of-synchronization information corresponding to the unsynchronized base station is less than 0, the method comprises the steps of:

i'. receiving one or more backhaul messages respectively from the one or more other synchronized base stations through X2 interface;

ii'. determining whether out-of-synchronization information in each of the one or more backhaul messages is greater than 0 respectively;

iii'. if out-of-synchronization information corresponding to an other unsynchronized base station is greater than 0, then when sending downlink data to the mobile station, processing head data block corresponding to the length of the out-of-synchronization information in downlink data sent by the other unsynchronized base station and sending the processed head data block to the mobile station at a specific time slot,

wherein the specific time slot is the start time slot, lasting the length of the out-of-synchronization information, within the time slot occupied by the unsynchronized base station for sending downlink signal.

7. The method of claim 6, wherein the step of processing the head data block comprises: multiplying the head data block to be transmitted by the channel transmission matrix of the downlink channel from the other unsynchronized base station to the mobile station and the precoding matrix of the other unsynchronized base station, as well as the inverse matrix of the channel transmission matrix of the downlink channel from the unsynchronized base station to the mobile station and the inverse matrix of the precoding matrix of the unsynchronized base station.

8. A method of assisting to control propagation delay in an unsynchronized base station of a wireless communication system based on COMP transmission, wherein when out-of-synchronization information corresponding to the unsynchronized base station is larger than 0, the method comprises the steps of:

   - sending to a mobile station downlink data to be transmitted with head data block corresponding to the length of the out-of-synchronization information clipped.

9. A method of assisting to control propagation delay in an unsynchronized base station of a wireless communication system based on COMP transmission, wherein when out-of-synchronization information corresponding to the unsynchronized base station is less than 0, the method comprises the steps of:

   - postponing transmission starting moment for the length of the out-of-synchronization information, and sending to a mobile station downlink data to be transmitted with tail data block corresponding to said length of the out-of-synchronization information clipped.

10. A control device for controlling propagation delay in a base station of a wireless communication system based on COMP transmission, wherein the control device is used for processing part of data of one or more other unsynchronized base stations and sending the processed part of data to the mobile station at one or more specific time slots simultaneously, when sending downlink data to a mobile station.

11. The control device of claim 10, wherein when the base station is a synchronized base station, the control device further comprises:

   a first receiving means, for receiving one or more backhaul messages respectively from the one or more other unsynchronized base stations through X2 interface;
   a first determining means, for determining whether out-of-synchronization information in each of the one or more backhaul messages is greater than 0 respectively;
   a first sending means, for processing head data block corresponding to the length of the out-of-synchronization information in downlink data sent by the unsynchronized base station and sending the processed head data block to the mobile station at a specific time slot simultaneously when sending downlink data to the mobile station, if out-of-synchronization information corresponding to an unsynchronized base station is greater than 0, wherein the specific time slot is the start time slot, lasting the length of the out-of-synchronization information, within the time slot occupied by the synchronized base station for sending downlink signal,
   the first sending means is further used for processing tail data block corresponding to the length of the out-of-synchronization information in downlink data sent by the unsynchronized base station and sending the processed tail data block to the mobile station at a specific time slot simultaneously when sending downlink data to the mobile station, if out-of-synchronization information corresponding to an unsynchronized base station is less than 0,
   wherein the specific time slot is the final time slot, lasting the length of the out-of-synchronization information, within the time slot occupied by the synchronized base station for sending downlink signal.

12. The control device of claim 11, wherein the processing of the head/tail data block comprises: multiplying the head/tail data block to be transmitted by the channel transmission matrix of the downlink channel from the unsynchronized base station to the mobile station and the precoding matrix of the unsynchronized base station, as well as the inverse matrix of the channel transmission matrix of the downlink channel from the synchronized base station to the mobile station and the inverse matrix of the precoding matrix of the synchronized base station.

13. The control device of claim 10, wherein when the base station is an unsynchronized base station and out-of-synchronization information corresponding to the unsynchronized base station is greater than 0, the control device comprises:

   a second receiving means, for receiving one or more backhaul messages respectively from one or more other unsynchronized base stations through X2 interface;

a second determining means, for determining whether out-of-synchronization information in each of the one or more backhaul messages is less than 0 respectively;

a second sending means, for processing tail data block corresponding to the length of the out-of-synchronization information in downlink data sent by the other unsynchronized base station and sending the processed tail data block to the mobile station at a specific time slot when sending downlink data to the mobile station, if out-of-synchronization information corresponding to an other unsynchronized base station is less than 0,

wherein the specific time slot is the final time slot, lasting the length of the out-of-synchronization information, within the time slot occupied by the unsynchronized base station for sending downlink signal.

14. The control device of claim 13, wherein the processing of the tail data block comprises: multiplying the tail data block to be transmitted by the channel transmission matrix of the downlink channel from the other unsynchronized base station to the mobile station and the precoding matrix of the other unsynchronized base station, as well as the inverse matrix of the channel transmission matrix of the downlink channel from the unsynchronized base station to the mobile station and the inverse matrix of the precoding matrix of the unsynchronized base station.

15. The control device of claim 10, wherein when the base station is an unsynchronized base station and out-of-synchronization information corresponding to the unsynchronized base station is less than 0, the control device comprises:

a third receiving means, for receiving one or more backhaul messages respectively from the one or more other synchronized base stations through X2 interface;

a third determining means, for determining whether out-of-synchronization information in each of the one or more backhaul messages is greater than 0 respectively;

a third sending means, for processing head data block corresponding to the length of the out-of-synchronization information in downlink data sent by the other unsynchronized base station and sending the processed head data block to the mobile station at a specific time slot when sending downlink data to the mobile station, if out-of-synchronization information corresponding to an other unsynchronized base station is greater than 0;

wherein the specific time slot is the start time slot, lasting the length of the out-of-synchronization information, within the time slot occupied by the unsynchronized base station for sending downlink signal.

16. The control device of claim 15, wherein the processing of the head data block comprises: multiplying the head data block to be transmitted by the channel transmission matrix of the downlink channel from the other unsynchronized base station to the mobile station and the precoding matrix of the other unsynchronized base station, as well as the inverse matrix of the channel transmission matrix of the downlink channel from the unsynchronized base station to the mobile station and the inverse matrix of the precoding matrix of the unsynchronized base station.

17. A first assisting control device for assisting to control propagation delay in an unsynchronized base station of a wireless communication system based on COMP transmission, wherein when out-of-synchronization information corresponding to the unsynchronized base station is larger than 0, the first assisting control device comprises:

a fourth sending means, for sending to a mobile station downlink data to be transmitted with head data block corresponding to the length of the out-of-synchronization information clipped.

18. A second assisting control device for assisting to control propagation delay in an unsynchronized base station of a wireless communication system based on COMP transmission, wherein when out-of-synchronization information corresponding to the unsynchronized base station is less than 0, the second assisting control device comprises:

a fifth sending means, for postponing transmission starting moment for the length of the out-of-synchronization information, and sending to a mobile station downlink data to be transmitted with tail data block corresponding to said length of the out-of-synchronization information clipped.

Fig.1

Base Station 11

Mobile Station 2

Base Station 12

Base Station 13

Fig. 2

S11

Receiving backhaul information from the unsynchronized BS 12 and the unsynchronized BS 13 via X2 interface respectively

S12

Respectively determining whether out-of-synchronization informationin in backhaul information from the unsynchronized BS 12 and the unsynchronized BS 13 is greater than 0

S13

S14

Processing head data block corresponding to the length of the out-of-synchronization information in DL data sent by the unsynchronized BS 12 and sending the processed head data block to the MS 2 at a specific time slot simultaneously when sending DL data to the MS 2, if out-of-synchronization information corresponding to the unsynchronized BS 12 is greater than 0

Processing tail data block corresponding to the length of the out-of-synchronization information in DL data sent by the unsynchronized BS 13 and sending the processed tail data block to the MS 2 at a specific time slot simultaneously when sending DL data to the MS 2, if out-of-synchronization information corresponding to the unsynchronized BS 13 is less than 0,

Fig. 3

The synchronized
base station 11

The solution of the present
invention

The unsynchronized
base station 12

The solution of the prior art

The solution of the present
invention

The unsynchronized
base station 13

The solution of the prior art

The solution of the present
invention

The detection window
of the mobile station 2

Fig. 4

The synchronized
base station 11

The solution of the present
invention

The unsynchronized
base station 12

The solution of the prior art

The solution of the present
invention

The unsynchronized
base station 13

The solution of the prior art

The solution of the present
invention

The detection window
of the mobile station 2

Fig. 5

The synchronized
base station 11

The
unsynchronized
base station 12

The
unsynchronized
base station 13

The
unsynchronized
base station 14

The detection window
of the mobile station 2

Fig. 6

A control device
100

A first receiving
means 1001

A first
determining
means 1002

A first sending
means 1003

Fig. 7

S11

Receiving backhaul information from the unsynchronized BS 12 and the unsynchronized BS 13 via X2 interface respectively

S12

Respectively determining whether out-of-synchronization information in backhaul information from the unsynchronized BS 12 and the unsynchronized BS 13 is greater than 0

S13

Processing head data block corresponding to the length of the out-of-synchronization information in DL data sent by the unsynchronized BS 12 and sending the processed head data block to the MS 2 at a specific time slot simultaneously when sending DL data to the MS 2, if out-of-synchronization information corresponding to the unsynchronized BS 12 is greater than 0

S14

Processing tail data block corresponding to the length of the out-of-synchronization information in DL data sent by the unsynchronized BS 13 and sending the processed tail data block to the MS 2 at a specific time slot simultaneously when sending DL data to the MS 2, if out-of-synchronization information corresponding to the unsynchronized BS 13 is less than 0,

# INTERNATIONAL SEARCH REPORT

| | International application No. |
|---|---|
| | PCT/CN2010/071089 |

### A. CLASSIFICATION OF SUBJECT MATTER

H04W56/00 (2009.01) i

According to International Patent Classification (IPC) or to both national classification and IPC

### B. FIELDS SEARCHED

Minimum documentation searched (classification system followed by classification symbols)

IPC: H04W,H04L,H04Q,H04B

Documentation searched other than minimum documentation to the extent that such documents are included in the fields searched

Electronic data base consulted during the international search (name of data base and, where practicable, search terms used)

CPDIABS,CPPABS,CPRSABS,CNTXT,CNKI,WPI,EPODOC: coordinate, cooperate, joint, transmission, transmit, base station, CoMP, delay, synchronous, loss of synchronization, downlink, time slot, head, tail, begin, end

### C. DOCUMENTS CONSIDERED TO BE RELEVANT

| Category* | Citation of document, with indication, where appropriate, of the relevant passages | Relevant to claim No. |
|---|---|---|
| A | CN101166073A(NTT DOCOMO INC) 23 Apr. 2008(23.04.2008) the whole document | 1-18 |
| A | CN101227392A (CAITUANFAREN IND TECH RES INST) 23 Jul. 2008(23.07.2008) the whole document | 1-18 |
| A | EP2012446A1(NOKIA CORP) 07 Jan.2009(07.01.2009) the whole document | 1-18 |
| A | WO2007148187A1(NOKIA CORP) 27 Dec. 2007(27.12.2007) the whole document | 1-18 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 09 Jun. 2010(09.06.2010) | **24 Jun. 2010 (24.06.2010)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 | **MEN Xiaojing** |
| Facsimile No. 86-10-62019451 | Telephone No. (86-10)62411441 |

Form PCT/ISA /210 (second sheet) (July 2009)

**INTERNATIONAL SEARCH REPORT**
Information on patent family members

| International application No. |
|---|
| PCT/CN2010/071089 |

| Patent Documents referred in the Report | Publication Date | Patent Family | Publication Date |
|---|---|---|---|
| CN101166073A | 23.04.2008 | JP2008104184A | 01.05.2008 |
| CN101227392A | 23.07.2008 | EP1942619A2 | 09.07.2008 |
| | | EP1942619A3 | 16.07.2008 |
| | | US2008165699A1 | 10.07.2008 |
| | | JP2008178094A | 31.07.2008 |
| | | INDEL200702713A | 01.08.2008 |
| | | KR20080064717A | 09.07.2008 |
| | | TW200833012A | 01.08.2008 |
| EP2012446A1 | 07.01.2009 | WO2009007313A2 | 15.01.2009 |
| | | WO2009007313A3 | 09.04.2009 |
| WO2007148187A1 | 27.12.2007 | EP2030467A1 | 04.03.2009 |

Form PCT/ISA /210 (patent family annex) (July 2009)